# EUROPÄISCHE PATENTSCHRIFT

(11) **EP 1 338 073 B1**
(45) Veröffentlichungstag und Bekanntmachung des Hinweises auf die Patenterteilung: **24.08.2005**
(21) Anmeldenummer: 01999028.2
(22) Anmeldetag: 27.11.2001
(51) Int. Cl.: H02J 7/00

(54) **SCHALTUNG ZUM LADEN VON AKKUMULATOREN**
BATTERY CHARGER CIRCUIT
CIRCUIT DE CHARGE DE BATTERIES

(30) Priorität: 30.11.2000 DE 10059523
(43) Veröffentlichungstag der Anmeldung: 27.08.2003
(73) Patentinhaber: Infineon Technologies AG, 81669 München (DE)
(72) Erfinder: BEERWERTH, Rolf, 59199 Boenen (DE); KRANZ, Christian, 40885 Ratingen Lintorf (DE); KIRCHHOFF, Hans-Gerd, 40885 Ratingen (DE)
(74) Vertreter: Lange, Thomas
(86) Internationale Anmeldenummer: PCT/DE2001/004498
(87) Internationale Veröffentlichungsnummer: WO 2002/045236

(56) Entgegenhaltungen:
- EP-A- 0 757 422
- DE-A- 3 106 171
- US-A- 5 039 931
- US-A- 5 596 259

## Beschreibung

Die Erfindung betrifft eine Ladeschaltung zur Aufladung einer Akkumulatoreinheit, wobei die Akkumulatoreinheit ein elektrisches Gerät mit Spannung versorgt.

Die derzeitigen Anforderungen des Marktes veranlassen die Hersteller von elektrischen und elektronischen Geräten, immer kleinere Geräte zu produzieren. Dabei ermöglicht die fortschreitende Miniaturisierung elektronischer Baugruppen handliche, mobil einsetzbare Geräte. Insbesondere im Bereich der Telekommunikation ist ein ausgeprägter Trend in diese Richtung zu beobachten. Dies betrifft in erster Linie Geräte wie z.B. Handys, schnurlose Telefone, Pager, Palms etc. Aufgrund der Abkopplung dieser Geräte von einer Netzversorgung müssen sie über Akkumulatoren betrieben werden. Dabei ist es erforderlich, dass die Akkumulatoren im Gerät selbst aufgeladen werden können. Beispielsweise muss der im portablen Hörer eines schnurlosen Telefons befindliche Akkumulator über die zugehörige Basisstation aufgeladen werden können. Es wäre nicht akzeptabel, wenn der Akkumulator zum Laden zuvor aus dem Gerät entnommen werden müsste.

Diese Anforderung bedingt es, dass während des Aufladevorgangs nicht nur der Akkumulator, sondern auch das durch den Akkumulator betriebene Gerät über die Ladeschaltung mit einer Ladespannung in Kontakt steht, die meist aus der Netzspannung erhalten wird. Es besteht die Gefahr, dass eine falsche (zu hohe) Ladespannung an das Gerät angelegt wird. Auch kann die Netzspannung unter Umständen erhebliche kurzfristige Schwankungen aufweisen. Daher muss das elektrische Gerät durch Überspannungsschutzschaltungen vor einer Zerstörung durch zu hohe Spannungen geschützt werden.

Zu diesem Zweck werden vorwiegend diskrete Bauelemente verwendet. Häufig kommen dabei Zenerdioden zum Einsatz. Diese Dioden sind durch eine genau spezifizierte Durchbruchspannung charakterisiert, bei der der Sperrstrom einen steilen Anstieg aufweist. Wenn die anliegende Spannung die Durchbruchspannung überschreitet, so wird die Zenerdiode folglich niederohmig. Die an der Zenerdiode anliegende Spannung ist daher stets auf die Durchbruchspannung begrenzt.

Aus der Druckschrift DE 31 06 171 A1 ist eine Ladeschaltung bekannt, die eine Laderegelung zum Steuern des Strom- und/oder Spannungsverlaufs des Aufladevorgangs umfasst. Die Laderegelung umfasst einen Regeltransistor, durch den der Ladestrom fließt, sowie ferner einen Vorschalttransistor, über dessen Kollektor-Emitter-Strecke der Steuerstrom des Regeltransistors fließt. Ferner umfasst die Ladeschaltung eine Überwachungseinheit, die bei Überschreiten eines vorgegebenen Spannungswerts die Laderegelung veranlasst, die an der Akkumulatoreinheit anliegende Spannung abzuschalten oder zu verringern.

In der den nächstliegenden Stand der Technik bildenden Druckschrift US 5,039,931 ist eine Ladeschaltung zur Aufladung einer Akkumulatoreinheit durch eine externe Ladespannung offenbart. Die Ladeschaltung umfasst eine Laderegelegung zum Steuern des Strom- und/oder Spannungsverlaufs des Aufladevorgangs und eine Überwachungseinheit. Die Überwachungseinheit vergleicht ein Signal, das die an der Akkumulatoreinheit anliegende Spannung repräsentiert, mit einem vorgegebenen Maximalwert und veranlasst bei Überschreitung des Maximalwerts die Laderegelung, die an der Akkumulatoreinheit anliegende Spannung abzuschalten oder zu verringern.

Aufgabe der Erfindung ist es, eine Ladeschaltung für Akkumulatoren zu schaffen, wobei der Aufwand an diskreten Bauelementen reduziert ist.

Die der Erfindung zugrunde liegende Aufgabenstellung wird durch die Merkmale des Anspruchs 1 gelöst.

Bei der vorliegenden Erfindung handelt es sich um eine Ladeschaltung zur Aufladung einer Akkumulatoreinheit durch eine externe Ladespannung, wobei die Akkumulatoreinheit ein elektrisches Gerät mit Spannung versorgt. Die Ladeschaltung weist eine Laderegelung auf, die den Strom- und/oder Spannungsverlauf des Aufladevorgangs steuert. Außerdem weist die Ladeschaltung eine Überwachungseinheit auf, welche ein Signal, das die an der Akkumulatoreinheit anliegende Spannung repräsentiert, mit einem vorgegebenen Maximalwert vergleicht, und welche die Laderegelung bei Überschreitung veranlasst, die an der Akkumulatoreinheit anliegende Spannung abzuschalten oder zu verringern. Die Laderegelung umfasst einen Regeltransistor, durch den der Ladestrom fließt. Die Überwachungseinheit sowie Teile der Laderegelung sind auf einem gemeinsamen Siliziumsubstrat implementiert, während der Regeltransistor als diskretes Bauelement realisiert ist.

Elektrische Geräte, die mit einer Akkumulatoreinheit betrieben werden, waren bisher mit einer Laderegelung zur Steuerung des Aufladevorgangs sowie mit zusätzlichen Bauelementen zum Schutz der Akkumulatoreinheit und des elektrischen Geräts vor Überspannungen ausgestattet. Bei der vorliegenden erfindungsgemäßen Ladeschaltung übernimmt die Laderegelung beide Funktionen, d.h. sie steuert den Aufladevorgang der Akkumulatoreinheit und dient gleichzeitig zum Schutz vor Überspannungen, wenn ihr von der Überwachungseinheit eine Spannungsüberschreitung angezeigt wird. Dadurch können zusätzliche, diskrete Bauelemente, wie z.B. Zenerdioden, die zum Überspannungsschutz eingesetzt wurden, eingespart werden. Die erfindungsgemäße Ladeschaltung ermöglicht folglich wegen der Einsparung von diskreten Bauelementen günstigere Herstellungskosten sowie einen kompakteren Aufbau des elektrischen Geräts. Die Akkumulatoreinheit kann während des Aufladevorgangs in dem elektrischen Gerät verbleiben.

Bei Überschreitung der vorgegebenen Maximalspannung kann die an der Akkumulatoreinheit anliegende Spannung entweder abgeschaltet oder verringert werden. Die einfachste Lösung ist es, die an der Akkumulatoreinheit anliegende Spannung völlig abzuschalten, wenn ein vorgegebener Maximalwert überschritten wird. Diese Ausführungsform kann mit einer einfachen Vergleichsschaltung realisiert werden.

Eine Lösung, bei der die Spannung nur begrenzt und nicht völlig abgeschaltet wird, hat den Vorteil, dass das elektrischen Gerät trotz der Spannungsüberschreitung weiterhin mit Spannung versorgt wird. Dies kann für viele Anwendungen entscheidend sein, etwa falls es sich um Geräte mit flüchtigen elektronischen Speichern handelt. Die dort gespeicherten Daten würden bei völligem Abschalten der Versorgungsspannung verloren gehen.

Der Regeltransistor ist bei dieser Ausführungsform das zentrale Bauelement, mit dem die Aufladung der Akkumulatoreinheit gesteuert wird. Mittels des Regeltransistors kann der gewünschte Ladestrom eingestellt werden.

Die gesamte Regelelektronik zur Ablaufsteuerung des Ladevorgangs sowie die Spannungsüberwachung zur Detektion von Überspannungen kann auf einer integrierten Schaltung untergebracht sein. Der Regeltransistor als einziges Leistungsbauteil ist als diskretes Bauelement realisiert. Der Regelelektronik wird ein Signal zugeführt, das die an der Akkumulatoreinheit anliegende Spannung repräsentiert. Der Steueranschluss des Regeltransistors (bei Verwendung eines FETs der Gate-Anschluss, bei Verwendung eines Bipolartransistors der Basisanschluss) ist mit der integrierten Schaltung verbunden, um den Ladestrom durch den Regeltransistor mittels der integrierten Regelelektronik kontrollieren zu können. Zur Realisierung einer kombinierten Laderegelung mit Überspannungsschutz genügt also ein Regeltransistor, der über zwei Signalleitungen mit einer integrierten Regelelektronik in Verbindung steht.

Es ist von Vorteil, wenn es sich bei dem Regeltransistor um einen Feldeffekttransistor handelt, über dessen Source-Drain-Strecke der Ladestrom fließt. Der Ladestrom bzw. die an der Akkumulatoreinheit anliegende Spannung kann dabei über das Gate-Potential des Regeltransistors eingestellt werden. Zur Veränderung des Ladestroms ist daher lediglich eine Umladung der Gate-Elektrode des FETs notwendig. Da kein permanenter Steuerstrom fließt, ermöglicht die Verwendung eines FETs als Leistungstransistor eine verlustarme und schnelle Regelung des Ladestroms.

Alternativ dazu kann es sich bei dem Regeltransistor um einen Bipolartransistor handeln, über dessen Kollektor-Emitter-Strecke der Ladestrom fließt. Dabei kann die an der Akkumulatoreinheit anliegende Spannung über den Basisstrom des Regeltransistors eingestellt werden. Fließt ein hoher Basisstrom, so ist der Widerstand zwischen Kollektor und Emitter des Regeltransistors klein, und es kann daher ein hoher Ladestrom fließen. Demgegenüber fließt bei einem geringen Basisstrom auch nur ein geringer Ladestrom. Der Ladevorgang lässt sich nicht nur an- und ausschalten, sondern durch Variieren des Basisstroms auch regeln. Das hat den Vorteil, dass beispielsweise die Höhe des Ladestroms als auch dessen zeitlicher Verlauf auf den Ladezustand, die Kapazität und den Typ der Akkumulatoreinheit abgestimmt werden kann.

Vorteilhafterweise wird für den Fall, dass das Signal, das die an der Akkumulatoreinheit anliegende Spannung repräsentiert, den vorgegebenen Maximalwert übersteigt, der Basisstrom des Regeltransistors verringert. Eine Verringerung des Basisstroms bedeutet nicht nur eine Verringerung des Ladestroms, sondern auch eine höhere Spannung, die zwischen Kollektor und Emitter des Regeltransistors abfällt. Diese Maßnahme bewirkt einen effektiven Schutz der Akkumulatoreinheit und der nachfolgend angeordneten Baugruppen vor zu hohen Spannungswerten. Der Basisstrom wird so reduziert, dass die an der Akkumulatoreinheit anliegende Spannung auf einen für die nachfolgend angeordneten Baugruppen noch tolerierbaren Wert reduziert wird und die Spannungsversorgung dieser Baugruppen weiterhin aufrecht erhalten bleibt.

Alternativ ist es jedoch auch möglich, bei einer Spannungsüberschreitung den Basisstrom des Regeltransistors komplett abzuschalten, um die extern anliegende Ladespannung vollständig von der Akkumulatoreinheit und den nachfolgend angeordneten Baugruppen zu entkoppeln. Hier wird der Transistor lediglich als Schalter verwendet, der die eingangs anliegende Ladespannung bei Überschreitung einer Maximalspannung vom Gerät trennt.

Bei sämtlichen bisher beschriebenen bevorzugten Ausführungsformen der Erfindung stand immer der Regeltransistor im Mittelpunkt. Dieser vereinigt in nur einem Bauelement beide Anforderungen, die an die Laderegelung gestellt werden: zum einen kann durch den Regeltransistor der Aufladevorgang gesteuert werden, zum anderen lassen sich durch den Regeltransistor die Akkumulatoreinheit und die nachfolgend angeordneten Baugruppen wirksam vor Überspannungen schützen. Daher müssen keine weiteren Bauelemente, wie z.B. Zenerdioden, zum Überspannungsschutz mehr verwendet werden. Ein Transistor ist ein vergleichsweise kleines und billiges elektronisches Bauelement, das für jede Leistungsanforderung ausgelegt werden kann und ein robustes Regelverhalten aufweist. Die erfindungsgemäße Ladeschaltung kann daher kompakt aufgebaut und kostengünstig produziert werden.

Gemäß einer weiteren bevorzugten Ausführungsform der Erfindung weist die Laderegelung einen Vorschalttransistor auf, über dessen Kollektor-Emitter-Strecke der Basisstrom des Regeltransistors fließt. Dadurch lässt sich der Basisstrom des Regeltransistors und damit auch der Ladestrom für die Akkumulatoreinheit über den Basisstrom des Vorschalttransistors regeln. Meist unterscheidet sich die zwischen VCHARGE+ und VCHARGE- anliegende Ladespannung von der Versorgungsspannung des Integrierten Schaltkreises, auf dem sich die Laderegelung befindet. Mittels des Vorschalttransistors T2 kann sichergestellt werden, dass trotz der unterschiedlichen Spannungsniveaus der Basisstrom von T1 auf Null heruntergeregelt werden kann. Der Vorschalttransistor T2 entkoppelt insofern die beiden Spannungsniveaus.

Eine vorteilhafte Ausführungsform der Erfindung sieht vor, dass die Ladeschaltung einen Zeitgeber umfasst, der den Beginn und das Ende des Aufladevorgangs steuert. Diese Maßnahme stellt eine einfache Möglichkeit dar, um die Aufladung zeitlich zu begrenzen und die Akkus dadurch vor Überladung zu schützen. Die Lebensdauer der Akkus wird auf diese Weise verlängert. Die Ladezeit kann dabei auf den verwendeten Typ der Akkumulatoren abgestimmt werden.

Der Zeitgeber kann auch so ausgeführt sein, dass er in regelmäßigen Abständen eine Aufladung der Akkumulatoreinheit veranlasst. Dadurch kann gewährleistet werden, dass das elektrische Gerät stets betriebsbereit ist. Gegebenenfalls muss die Zeitspanne zwischen zwei aufeinanderfolgenden Ladevorgängen verkürzt werden, falls das elektrische Gerät stark beansprucht wird.

Gemäß einer weiteren vorteilhaften Ausführungsform der Erfindung steuert die Ladeschaltung den Aufladevorgang in Abhängigkeit vom Ladungszustand und/oder der Ladekapazität der Akkumulatoreinheit. Um die erfindungsgemäße Ladeschaltung möglichst universell einsetzbar zu machen, wird zunächst der Ladungszustand und die Ladekapazität der verwendeten Akkumulatoren erfasst, um die Akkumulatoren dann entsprechend aufzuladen. Durch Erfassen von Ladungszustand und Ladekapazität kann zum einen eine Überladung der Akkumulatoren verhindert werden. Außerdem kann der Verlauf des Ladevorgangs an den Typ der Akkumulatoren angepasst werden. Einige elektronische Geräte, insbesondere Laptops und Handys, sind mit verschiedenen Akkumulatoreinheiten lieferbar, die sich hinsichtlich Qualität, Kapazität, elektrochemischer Zusammensetzung, Lebensdauer sowie hinsichtlich des Preises unterscheiden. Durch Erfassen des Akkumulatortyps kann der Ladestrom, die Ladezeit, der Verlauf von Ladestrom und Ladespannung etc. an den verwendeten Typ angepasst werden.

Um vor der Aufladung eine möglichst vollständige Entladung der verwendeten Akkumulatoren zu erreichen, kann eine Sequenz von Lade- und Entladevorgängen durchgeführt werden. Dadurch wird die Lebensdauer der Akkus verlängert.

Bei schnellen Ladevorgängen kann es wegen der innerhalb kurzer Zeit transferierten, relativ großen Ladungsmenge zu erheblicher Wärmeentwicklung kommen. Zur Vermeidung dieser Wärmeentwicklung ist es von Vorteil, die externe Ladespannung im gepulsten Betrieb mit der Akkumulatoreinheit zu verbinden. Zu Beginn des Ladevorgangs fließt ein hoher Ladestrom, und deshalb sind die Einschaltphasen des Ladestroms wesentlich kürzer als die Ausschaltphasen, in denen die Akkumulatoren zwecks Abkühlung von der externen Ladespannung entkoppelt sind. Mit fortgesetztem Ladevorgang sinkt der Ladestrom ab, und die Einschalt- und Ausschaltphasen können einander angenähert werden.

Zur Vermeidung einer Überhitzung der Akkumulatoreinheit und des Geräts kann darüber hinaus während des Aufladevorgangs die Temperatur der Akkumulatoreinheit erfasst werden. Bei Überhitzung könnte der Ladestrom reduziert werden oder der Aufladevorgang unterbrochen werden.

Es ist von Vorteil, wenn die Überwachungseinheit einen Analog/Digital-Wandler umfasst, der das Signal, das die an der

Akkumulatoreinheit anliegende Spannung repräsentiert, digitalisiert. Das digitalisierte Signal kann dann jeweils mit dem vorgegebenen Maximalwert verglichen werden, um Überspannungen zu erkennen.

Gemäß einer weiteren bevorzugten Ausführungsform der Erfindung weist die Ladeschaltung eine Signalleitung zur Ladespannungserkennung auf, über die das elektrische Gerät mit Spannung versorgt werden kann. Dies hat den Vorteil, dass bei entnommener oder entladener Akkumulatoreinheit die Spannungsversorgung der Laderegelung sowie des elektrischen Geräts aufrecht erhalten werden kann.

Bei einer weiteren vorteilhaften Ausführungsform der Erfindung ist die Signalleitung zur Ladespannungserkennung mit dem Basisanschluss des Vorschalttransistors verbunden. Nur wenn die Basis-Emitter-Spannung des Vorschalttransistors einen bestimmten Wert überschreitet und ein Basisstrom durch den Vorschalttransistor fließt, kann durch den Regeltransistor ein Ladestrom fließen. Daher stellt die Verbindung zwischen der Signalleitung zur Ladespannungserkennung und der Basis des Vorschalttransistors sicher, dass der Ladestrom nur dann fließen kann, wenn eine genügend große externe Ladespannung anliegt. Wenn keine externe Ladespannung anliegt, sperrt der Vorschalttransistor. Dadurch wird eine Entladung des Akkumulators über die von außen zugänglichen Ladekontakte (beispielsweise durch Kurzschluss oder Kriechströme) verhindert.

Es ist von Vorteil, wenn auf der Signalleitung zur Ladespannungserkennung auftretende Überspannungen mittels eines Shunt-Reglers abgeführt werden. Der Shunt-Regler schützt die Signalleitung zur Ladespannungserkennung vor Überspannungen, indem er oberhalb eines vorgegebenen Spannungswerts soviel Strom beispielsweise gegen Masse abführt, dass die Spannung auf der Signalleitung zur Ladespannungserkennung nicht weiter ansteigen kann.

Gemäß einer weiteren vorteilhaften Ausführungsform der Erfindung kann über die Signalleitung zur Ladespannungserkennung gemessen werden, ob eine externe Ladespannung anliegt. Nur wenn eine genügend große externe Ladespannung anliegt, wird der Regeltransistor für den Ladestrom durchgeschaltet.

Vorzugsweise wird die Signalleitung zur Ladespannungserkennung während der soeben beschriebenen Messung von der Akkumulatoreinheit entkoppelt. Es ist nämlich durchaus möglich, dass die Akkumulatoreinheit über die Emitter-Kollektor-Strecke des Regeltransistors eine Spannung an der Signalleitung zur Ladespannungserkennung erzeugt, welche dann fälschlicherweise als externe Ladespannung erkannt würde. Folglich wird durch die Entkopplung sichergestellt, dass bei der Messung der auf der Signalleitung zur Ladespannungserkennung anliegenden Spannung wirklich nur die externen Ladespannung gemessen wird.

Nachfolgend wird die Erfindung anhand zweier in der Zeichnung dargestellter Ausführungsbeispiele weiter beschrieben. Es zeigen:
- Fig. 1: ein Übersichtsschaltbild des ersten Ausführungsbeispiels der Ladeschaltung; und
- Fig. 2: ein Übersichtsschaltbild des zweiten Ausführungsbeispiels der Ladeschaltung.

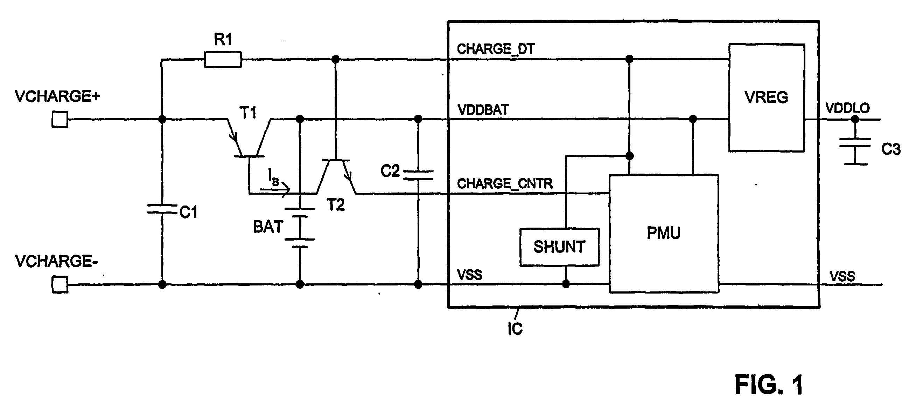

Fig. 1 zeigt eine Akkumulatoreinheit BAT, die über eine an die Ladekontakte VCHARGE+ und VCHARGE- angeschlossene externe Ladespannung aufgeladen werden kann. Die Akkumulatoreinheit BAT versorgt ein elektrisches Gerät mit Spannung. Dazu ist der positive Pol der Akkumulatoreinheit BAT mit einer Signalleitung VDDBAT verbunden; der negative Pol liegt auf einem gemeinsamen festen Potential, welches insbesondere die Masse VSS sein kann. Das elektrische Gerät steht ebenfalls mit der Signalleitung VDDBAT und der Masse VSS in Verbindung. Über die Signalleitung VDDBAT kann folglich die von der Akkumulatoreinheit BAT erzeugte Spannung bzw. die an der Akkumulatoreinheit BAT anliegende Spannung abgegriffen werden. In diesem Ausführungsbeispiel setzt sich die Akkumulatoreinheit BAT aus zwei seriell geschalteten Akkumulatoren zusammen.

Darüber hinaus sind die Ladekontakte VCHARGE+ und VCHARGE-über einen Kondensator C1 miteinander verbunden. Ebenso stehen die beiden Pole der Akkumulatoreinheit BAT über einen Kondensator C2 in Verbindung. Die Kondensatoren C1 und C2 dienen jeweils zur Glättung der anliegenden Spannungen.

Zwischen den Ladekontakt VCHARGE+ und den positiven Pol der Akkumulatoreinheit BAT ist ein Regeltransistor T1 geschaltet. Dieser Regeltransistor T1 ist ein pnp-Transistor, dessen Emitteranschluss mit dem Ladekontakt VCHARGE+ und dessen Kollektoranschluss mit der Signalleitung VDDBAT in Verbindung steht. Über die Emitter-Kollektor-Strecke des Regeltransistors T1 fließt der Ladestrom für die Akkumulatoreinheit BAT, sofern die Ladekontakte VCHARGE+ und VCHARGE- mit einer genügend großen externen Ladespannung verbunden sind und sofern über die Basis des Regeltransistors T1 ein hinreichend großer Basisstrom I_{B} fließt.

Über den Basisstrom I_{B} von T1 kann der Ladestrom sowohl an- und ausgeschaltet als auch gesteuert werden. Dazu ist es notwendig, dass von der Basis des Regeltransistors T1 ein Strom abgeführt werden kann. Dieses geschieht über einen Vorschalttransistor T2. Der Vorschalttransistor T2 ist in diesem Ausführungsbeispiel durch einen npn-Transistor realisiert. Der Kollektoranschluss des Vorschalttransistors T2 liegt am Basisanschluss des Regeltransistors T1 an, der Emitteranschluss an einer Signalleitung CHARGE_CNTR. Über die Kollektor-Emitter-Strecke des Vorschalttransistors T2 fließt der Basisstrom I_{B} des Regeltransistors T1.

Die Signalleitungen VDDBAT, CHARGE_CNTR und die Masse VSS sind mit einer Ladesteuereinheit PMU verbunden. Die Ladesteuereinheit PMU misst bei gesperrtem Regeltransistor T1 die von der Akkumulatoreinheit BAT erzeugte Spannung über die Signalleitung VDDBAT. Sofern die Akkumulatoreinheit BAT aufgeladen werden soll, wird die Signalleitung CHARGE_CNTR von der Ladesteuereinheit PMU mit einer Stromsenke verbunden. Dann kann der Basisstrom I_{B} des Regeltransistors T1 gegen die Masse VSS abfließen. Dies geschieht allerdings nur dann, wenn die Basis-Emitter-Spannung des Vorschalttransistors T2 genügend groß ist. Die Basis des Vorschalttransistors T2 ist über einen Widerstand R1 mit dem Ladekontakt VCHARGE+ verbunden. Falls an den beiden Ladekontakten VCHARGE+ und VCHARGE- eine externe Ladespannung anliegt, dann fließt ein Basisstrom durch T2, und der Basisstrom I_{B} kann über die Emitter-Kollektor-Strecke von T2 fließen. Sind dagegen die beiden Ladekontakte VCHARGE+ und VCHARGE- nicht mit einer externen Ladespannung verbunden, so erlaubt die an der Basis des Vorschalttransistors T2 anliegende Spannung keinen Stromfluss durch die Basis des Regeltransistors T1 und damit auch keinen Ladestrom durch die Akkumulatoreinheit BAT. Dies gewährleistet, dass die Akkumulatoreinheit BAT nicht versehentlich entladen werden kann.

Die Ladesteuereinheit PMU regelt - über den Basisstrom I_{B} von T1 - den Ladestrom durch die Akkumulatoreinheit BAT. Gleichzeitig erfasst die Ladesteuereinheit PMU über die Signalleitung VDDBAT die an der Akkumulatoreinheit BAT anliegende Spannung. Es kann dabei auch vorgesehen sein, dass die Ladesteuereinheit PMU zunächst den Ladezustand und/oder die Ladekapazität der Akkumulatoreinheit BAT misst und den Ladevorgang dann anhand dieser Parameter optimiert. Des weiteren können während des Ladevorgangs auch verschiedene von der Ladesteuereinheit PMU festgelegte Lade- und Entladezyklen der Akkumulatoreinheit BAT durchlaufen werden. Dieses Vorgehen kann sinnvoll sein, da es die Lebensdauer der Akkumulatoreinheit BAT verlängert.

Über die Signalleitung zur Ladespannungserkennung CHARGE_DT, die über den Widerstand R1 mit dem Ladekontakt VCHARGE+ verbunden ist, kann die Ladesteuereinheit PMU feststellen, ob überhaupt eine externe Ladespannung an den Ladekontakten VCHARGE+ und VCHARGE- anliegt. Um die externe Ladespannung messen zu können, wird der Regeltransistor T1 gepulst angesteuert, denn über den Invers-Strom des Regeltransistors T1 würde sich auch ohne externe Ladespannung an den Ladekontakten VCHARGE+ und VCHARGE- eine Spannung aufbauen. Nur wenn eine externe Ladespannung anliegt, startet die Ladesteuereinheit PMU den Ladevorgang der Akkumulatoreinheit BAT.

Die Signalleitung zur Ladespannungserkennung CHARGE_DT dient noch einem zweiten Zweck: falls die Akkumulatoreinheit entladen ist oder aus dem Gerät entnommen wurde, kann das elektrische Gerät über die Signalleitung CHARGE_DT von der externen Ladespannung mit Spannung versorgt werden.

Bisher wurden die Bauelemente dieses Ausführungsbeispiels der Erfindung lediglich in ihrer Funktion, die zum Aufladen der Akkumulatoreinheit BAT beiträgt, beschrieben. Manche dieser Bauelemente erfüllen jedoch noch eine zweite Funktion als Überspannungsschutzelemente. Durch die externe Ladespannung kann es zu Überspannungen kommen, welche sowohl die Akkumulatoreinheit BAT als auch die Baugruppen des elektrischen Geräts gefährden würden.

Die Akkumulatoreinheit BAT und die sonstigen mit der Signalleitung VDDBAT verbundenen Baugruppen werden über den Regeltransistor T1 vor Überspannungen geschützt. Dazu wird die Überspannung an der Signalleitung VDDBAT zunächst von der Ladesteuereinheit PMU detektiert und danach der Basisstrom I_{B} des Regeltransistors T1 soweit minimiert, dass genügend Spannung über die Emitter-Kollektor-Spannung des Regeltransistors T1 abfällt. Es kann auch vorgesehen sein, dass der Basisstrom des Regeltransistors T1 bei einer auftretenden Überspannung abgeschaltet wird, damit die betroffenen Baugruppen von der externen Ladespannung entkoppelt sind.

Sämtliche Baugruppen, die mit der Signalleitung zur Ladespannungserkennung CHARGE_DT verbunden sind, sind über einen aktiven Shunt-Regler SHUNT geschützt, d.h. sobald die Spannung über einen maximal zulässigen Wert ansteigt, wird der Shunt-Regler SHUNT niederohmig und führt soviel Strom gegen die Masse VSS ab, dass die Spannung an der Signalleitung CHARGE_DT nicht weiter ansteigen kann. Dabei dient der Widerstand R1 zur Strombegrenzung.

Die Spannung, die an der Signalleitung CHARGE_CNTR anliegt, ist aufgrund des dazwischengeschalteten Vorschalttransistors T2 immer um dessen Basis-Emitter-Spannung kleiner als die an der Signalleitung CHARGE_DT anliegende Spannung. Somit sind auch die Baugruppen, die mit der Signalleitung CHARGE_CNTR verbunden sind, vor Überspannungen geschützt.

Beim Betrieb des elektrischen Geräts ist die von der Akkumulatoreinheit BAT gelieferte Spannung häufig zu hoch für manche integrierte Sub-Mikron Schaltung. Jedoch kann die Spannung der Akkumulatoreinheit BAT nicht generell abgesenkt werden, da andere Bauelemente, wie z.B. LEDs, LCDs, HF-Bauelemente oder Audio-Komponenten, eine entsprechend hohe Spannung benötigen. Aus diesem Grund müssen sowohl die relativ hohe Spannung auf der Signalleitung VDDBAT als auch niedrigere Spannungen zur Verfügung stehen. Diese niedrigeren Spannungen werden durch eine Spannungsregulierungseinheit VREG geliefert. Dazu ist der Eingang der Spannungsregulierungseinheit VREG mit der Signalleitung VDDBAT verbunden. Die Spannungsregulierungseinheit VREG kann sich zusammen mit der Ladesteuereinheit PMU auf dem IC befinden. Am Niederspannungsausgang VDDLO der Spannungsregulierungseinheit VREG kann eine niedrigere Versorgungsspannung abgegriffen werden. Die Spannung am Niederspannungsausgang VDDLO wird durch den Kondensator C3 geglättet, der gegen die Masse VSS geschaltet ist.

Bei der vorstehend beschriebenen Ladeschaltung sind die Ladesteuereinheit PMU und der Shunt-Regler SHUNT sowie optional die Spannungsregulierungseinheit VREG gemeinsam als integrierte Schaltung IC realisiert. Im Gegensatz dazu ist der Regeltransistor T1 als diskretes Bauelement ausgeführt. Dies gilt in gleicher Weise auch für das nachfolgend beschriebene Ausführungsbeispiel.

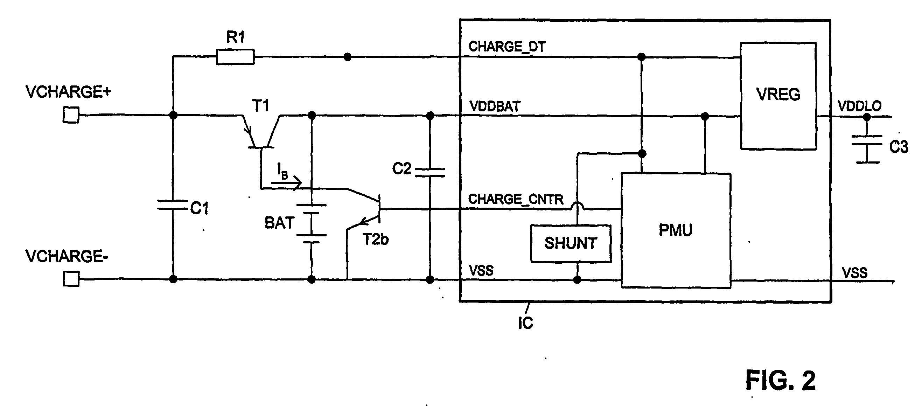

Das Übersichtsschaltbild eines zweiten erfindungsgemäßen Ausführungsbeispiels ist in Fig. 2 dargestellt. Dieses Ausführungsbeispiel unterscheidet sich von dem ersten erfindungsgemäßen Ausführungsbeispiel lediglich in der Beschaltung des Vorschalttransistors T2. Der Kollektor des Vorschalttransistors T2b des zweiten Ausführungsbeispiels liegt an der Basis des Regeltransistors T1 an, der Emitter auf der Masse VSS. Der Basisanschluss des Vorschalttransistors T2b ist über die Signalleitung CHARGE_CNTR mit der Ladesteuereinheit PMU verbunden. In diesem Ausführungsbeispiel wird der Vorschalttransistor T2b über seine Basis gesteuert. Wenn die Basis von T2b durch die Ladesteuereinheit PMU auf ein positives Potential gelegt wird, dann beginnt ein Basisstrom durch T2b zu fließen. Dadurch kann der Basisstrom des Regeltransistors T1 über die Kollektor-Emitter-Strecke von T2b nach VSS abfließen, und der einsetzende Ladestrom lädt über T1 die Akkumulatoreinheit BAT auf.

## Patentansprüche

1. Ladeschaltung zur Aufladung einer Akkumulatoreinheit (BAT) durch eine externe Ladespannung, wobei die Akkumulatoreinheit (BAT) ein elektrisches Gerät mit Spannung versorgt, mit
- einer Laderegelung, die den Strom- und/oder Spannungsverlauf des Aufladevorgangs steuert; und mit
- einer Überwachungseinheit, welche ein Signal, das die an der Akkumulatoreinheit (BAT) anliegende Spannung repräsentiert, mit einem vorgegebenen Maximalwert vergleicht, und welche die Laderegelung bei Überschreitung veranlasst, die an der Akkumulatoreinheit (BAT) anliegende Spannung abzuschalten oder zu verringern,
**dadurch gekennzeichnet, dass**
- die Laderegelung einen Regeltransistor (T1) umfasst, durch den der Ladestrom fließt,
- die Überwachungseinheit sowie Teile der Laderegelung auf einem gemeinsamen Siliziumsubstrat (IC) implementiert sind und
- der Regeltransistor (T1) als diskretes Bauelement realisiert ist.

2. Ladeschaltung nach Anspruch 1,
**dadurch gekennzeichnet, dass**
es sich bei dem Regeltransistor um einen Feldeffekttransistor handelt, über dessen Source-Drain-Strecke der Ladestrom fließt.

3. Ladeschaltung nach Anspruch 2,
**dadurch gekennzeichnet, dass**
die an der Akkumulatoreinheit (BAT) anliegende Spannung über das Gate-Potential des Regeltransistors einstellbar ist.

4. Ladeschaltung nach Anspruch 1,
**dadurch gekennzeichnet, dass**
es sich bei dem Regeltransistor (T1) um einen Bipolartransistor handelt, über dessen Kollektor-Emitter-Strecke der Ladestrom fließt.

5. Ladeschaltung nach Anspruch 4,
**dadurch gekennzeichnet, dass**
die an der Akkumulatoreinheit (BAT) anliegende Spannung über den Basisstrom (I_{B}) des Regeltransistors (T1) einstellbar ist.

6. Ladeschaltung nach Anspruch 5,
**dadurch gekennzeichnet, dass**
für den Fall, dass das Signal, das die an der Akkumulatoreinheit (BAT) anliegende Spannung repräsentiert, den vorgegebenen Maximalwert übersteigt, der Basisstrom (I_{B}) des Regeltransistors (T1) abgeschaltet bzw. verringert wird.

7. Ladeschaltung nach Anspruch 5 oder 6,
**dadurch gekennzeichnet, dass**
die Laderegelung einen Vorschalttransistor (T2, T2b) aufweist, über dessen Kollektor-Emitter-Strecke der Basisstrom (I_{B}) des Regeltransistors (T1) fließt.

8. Ladeschaltung nach einem der vorhergehenden Ansprüche,
**dadurch gekennzeichnet, dass**
die Ladeschaltung einen Zeitgeber umfasst, der den Beginn und das Ende des Aufladevorgangs steuert.

9. Ladeschaltung nach einem der vorhergehenden Ansprüche,
**dadurch gekennzeichnet, dass**
die Ladeschaltung den Aufladevorgang in Abhängigkeit vom Ladungszustand und/oder der Ladekapazität der Akkumulatoreinheit (BAT) steuert.

10. Ladeschaltung nach einem der vorhergehenden Ansprüche,
**dadurch gekennzeichnet, dass**
die externe Ladespannung im gepulsten Betrieb mit der Akkumulatoreinheit (BAT) verbunden wird.

11. Ladeschaltung nach einem der vorhergehenden Ansprüche,
**dadurch gekennzeichnet, dass**
die Überwachungseinheit einen Analog/Digital-Wandler umfasst, der das Signal, das die an der Akkumulatoreinheit (BAT) anliegende Spannung repräsentiert, digitalisiert.

12. Ladeschaltung nach einem der vorhergehenden Ansprüche,
**dadurch gekennzeichnet, dass**
die Ladeschaltung eine Signalleitung zur Ladespannungserkennung (CHARGE_DT) aufweist, über die das elektrische Gerät mit Spannung versorgt werden kann.

13. Ladeschaltung nach einem der vorhergehenden Ansprüche,
**dadurch gekennzeichnet, dass**
die Ladeschaltung eine Signalleitung zur Ladespannungserkennung (CHARGE_DT) aufweist, die mit dem Basisanschluss des Vorschalttransistors (T2) verbunden ist.

14. Ladeschaltung nach einem der Ansprüche 12 oder 13,
**dadurch gekennzeichnet, dass**
auf der Signalleitung zur Ladespannungserkennung (CHARGE_DT) auftretende Überspannungen mittels eines Shunt-Reglers (SHUNT) abgeführt werden.

15. Ladeschaltung nach einem der vorhergehenden Ansprüche,
**dadurch gekennzeichnet, dass**
die Ladeschaltung eine Signalleitung zur Ladespannungserkennung (CHARGE_DT) aufweist, über die gemessen werden kann, ob eine externe Ladespannung anliegt.

16. Ladeschaltung nach Anspruch 15,
**dadurch gekennzeichnet, dass**
die Signalleitung zur Ladespannungserkennung (CHARGE_DT) während der Messung, ob eine externe Ladespannung anliegt, von der Akkumulatoreinheit (BAT) entkoppelt ist.

17. Elektrisches Gerät, welches eine Ladeschaltung nach einem der Ansprüche 1 bis 16 umfasst.

## Claims

1. Charging circuit for charging a rechargeable battery unit (BAT) by means of an external charging voltage, with the rechargeable battery unit (BAT) supplying an electrical appliance with voltage, having
- a charge regulator which controls the current and/or voltage profile of the charging process; and having
- a monitoring unit which compares a signal, which represents the voltage which is applied to the rechargeable battery unit (BAT), with a predetermined maximum value, and which, if this maximum value is exceeded, causes the charging regulator to switch off or to reduce the voltage which is applied to the rechargeable battery unit (BAT),
**characterized in that**
- the charging regulator has a control transistor (T1) through which the charging current flows,
- the monitoring unit as well as parts of the charging regulator are implemented on a common silicon substrate (IC), and
- the control transistor (T1) is in the form of a discrete component.

2. Charging circuit according to Claim 1,
**characterized in that**
the control transistor is a field-effect transistor, via whose source-drain path the charging current flows.

3. Charging circuit according to Claim 2,
**characterized in that**
the voltage which is applied to the rechargeable battery unit (BAT) can be adjusted via the gate potential of the control transistor.

4. Charging circuit according to Claim 1,
**characterized in that**
the control transistor (T1) is a bipolar transistor, via whose collector-emitter path the charging current flows.

5. Charging circuit according to Claim 4,
**characterized in that**
the voltage which is applied to the rechargeable battery unit (BAT) can be adjusted via the base current (I_{B}) of the control transistor (T1).

6. Charging circuit according to Claim 5,
**characterized in that**,
in the situation where the signal which represents the voltage which is applied to the rechargeable unit (BAT) exceeds the predetermined maximum value, the base current (I_{B}) of the control transistor (T1) is switched off or reduced.

7. Charging circuit according to Claim 5 or 6,
**characterized in that**
the charging regulator has a series transistor (T2, T2b), via whose collector-emitter path the base current (I_{B}) of the control transistor (T1) flows.

8. Charging circuit according to one of the preceding claims,
**characterized in that**
the charging circuit has a timer which controls the start and the end of the charging process.

9. Charging circuit according to one of the preceding claims,
**characterized in that**
the charging circuit controls the charging process as a function of the state of charge and/or the charge capacity of the rechargeable battery unit (BAT).

10. Charging circuit according to one of the preceding claims,
**characterized in that**
the external charging voltage is connected to the rechargeable battery unit (BAT) in the pulsed mode.

11. Charging circuit according to one of the preceding claims,
**characterized in that**
the monitoring unit has an analogue/digital converter, which digitizes the signal which represents the voltage which is applied to the rechargeable battery unit (BAT).

12. Charging circuit according to one of the preceding claims,
**characterized in that**
the charging circuit has a signal line for charging voltage identification (CHARGE_DT), via which the electrical appliance can be supplied with voltage.

13. Charging circuit according to one of the preceding claims,
**characterized in that**
the charging circuit has a signal line for charging voltage identification (CHARGE_DT), which is connected to the base connection of the series transistor (T2).

14. Charging circuit according to one of Claims 12 or 13,
**characterized in that**
any overvoltages which occur on the signal line for charging voltage identification (CHARGE_DT) are dissipated by means of a shunt regulator (SHUNT).

15. Charging circuit according to one of the preceding claims,
**characterized in that**
the charging circuit has a signal line for identifying the charging voltage (CHARGE_DT), via which it is possible to measure whether an external charging voltage is present.

16. Charging circuit according to Claim 15,
**characterized in that**
the signal line for identifying the charging voltage (CHARGE_DT) is decoupled from the rechargeable battery unit (BAT) while measuring whether an external charging voltage is present.

17. Electrical appliance which has a charging circuit according to one of Claims 1 to 16.

## Revendications

1. Circuit de charge d'un élément (BAT) d'accumulateur par une tension extérieure de charge, l'élément (BAT) d'accumulateur alimentant un appareil électrique en tension, comprenant
- une régulation de charge, qui règle la courbe de courant et/ou de tension du processus de charge ; et comprenant
- une unité de contrôle qui compare un signal représentant la tension appliquée à l'élément (BAT) d'accumulateur à une valeur maximum prescrite et qui provoque en cas de dépassement la régulation de charge qui interrompt ou abaisse la tension appliquée à l'élément (BAT) d'accumulateur,
**caractérisé en ce que**
- la régulation de charge comprend un transistor (T1) de régulation dans lequel passe le courant de charge ;
- l'unité de contrôle ainsi que des parties de la régulation de charge sont mises en oeuvre sur un substrat (IC) de silicium commun ; et
- le transistor (T1) de régulation est réalisé sous la forme d'un composant discret.

2. Circuit de charge suivant la revendication 1,
**caractérisé en ce que**
le transistor de régulation est un transistor à effet de champ, par la section de source-drain duquel passe le courant de charge.

3. Circuit de charge suivant la revendication 2,
**caractérisé en ce que**
la tension appliquée à l'élément (BAT) d'accumulateur peut être réglée par le potentiel de grille du transistor de régulation.

4. Circuit de charge suivant la revendication 1,
**caractérisé en ce que**
le transistor (T1) de régulation est un transistor bipolaire, par la section collecteur-émetteur duquel passe le courant de charge.

5. Circuit de charge suivant la revendication 4,
**caractérisé en ce que**
la tension appliquée à l'élément (BAT) d'accumulateur peut être réglée par le courant (I_{B}) de base du transistor (T1) de régulation.

6. Circuit de charge suivant la revendication 5,
**caractérisé en ce que**
dans le cas où le signal qui représente la tension appliquée à l'élément (BAT) d'accumulateur dépasse la valeur maximum prescrite, le courant (I_{B}) de base du transistor (T1) de régulation est interrompu ou diminué.

7. Circuit de charge suivant la revendication 5 ou 6,
**caractérisé en ce que**
la régulation de charge comporte un transistor (T2, T2b) de ballast, par la section collecteur-émetteur duquel passe le courant (I_{B}) de base du transistor (T1) de régulation.

8. Circuit de charge suivant l'une des revendications précédentes,
**caractérisé en ce que**
le circuit de charge comprend une minuterie qui commande le début et la fin de l'opération de charge.

9. Circuit de charge suivant l'une des revendications précédentes,
**caractérisé en ce que**
le circuit de charge commande le processus de charge en fonction de l'état de charge et/ou de la capacité de charge de l'élément (BAT) d'accumulateur.

10. Circuit de charge suivant l'une des revendications précédentes,
**caractérisé en ce que**
la tension extérieure de charge est reliée en mode pulsé à l'élément (BAT) d'accumulateur.

11. Circuit de charge suivant l'une des revendications précédentes,
**caractérisé en ce que**
l'unité de contrôle comprend un convertisseur analogique/numérique qui numérise le signal représentant la tension appliquée à l'élément (BAT) d'accumulateur.

12. Circuit de charge suivant l'une des revendications précédentes,
**caractérisé en ce que**
le circuit de charge a une ligne de signalisation pour la détection de la tension de charge (CHARGE_DT), par laquelle l'appareil électrique peut être alimenté en tension.

13. Circuit de charge suivant l'une des revendications précédentes,
**caractérisé en ce que**
le circuit de charge a une ligne de signalisation pour la détection de la tension de charge (CHARGE_DT), qui est reliée à la borne de base du transistor (T2) de ballast.

14. Circuit de charge suivant l'une des revendications 12 ou 13,
**caractérisé en ce que**
des surtensions se produisant sur la ligne de signalisation pour la détection de la tension de charge (CHARGE_DT) sont évacuées au moyen d'un régulateur shunt (SHUNT).

15. Circuit de charge suivant l'une des revendications précédentes,
**caractérisé en ce que**
le circuit de charge a une ligne de signalisation pour la détection de la tension de charge (CHARGE_DT), par laquelle on peut mesurer s'il s'applique une tension extérieure de charge.

16. Circuit de charge suivant la revendication 15,
**caractérisé en ce que**
la ligne de signalisation pour la détection de la tension de charge (CHARGE_DT) est découplée pendant la mesure s'il s'applique une tension extérieure de charge de l'élément (BAT) d'accumulateur.

17. Appareil électrique qui comprend un circuit de charge suivant l'une des revendications 1 à 16.
